(19) Europäisches Patentamt

European Patent Office

Office européen des brevets

(11) EP 0 782 209 A1

(12) EUROPEAN PATENT APPLICATION

(43) Date of publication:
02.07.1997 Bulletin 1997/27

(51) Int. Cl.⁶: **H01M 8/04**, B60L 11/18, H01M 16/00, H02J 7/00

(21) Application number: 95830562.5

(22) Date of filing: 29.12.1995

(84) Designated Contracting States:
BE DE FR GB IT NL

(71) Applicant: FINMECCANICA S.p.A. AZIENDA ANSALDO
I-16128 Genova (IT)

(72) Inventors:
• Bohrer, Wilhelm
I-16100 Genova (IT)
• Florio, Andrea
I-15067 Novi Ligure - Alessandria (IT)
• Marcenaro, Bartolomeo
I-16129 Genova (IT)

(74) Representative: Falcetti, Carlo et al
c/o JACOBACCI & PERANI S.p.A.
Via Visconti di Modrone, 7
20122 Milano (IT)

(54) **A supply system with fuel cells and a buffer battery for a self-supplied vehicle with electric drive**

(57) A supply system with fuel cells (1) and a buffer battery (8) for a self-supplied vehicle with electric drive, in which the electrical power developed by the fuel cells is transferred to the battery and to the load (Z1) by means of a resonant converter (3, L, C) with a series load (Z) constituted by a voltage step-up transformer (5) with its secondary (51) connected to a rectifier bridge (6) the output of which is connected to the battery terminals, and the switching frequency of the converter, which operates with an output power independent of its load and proportional to the switching frequency, is controlled so as to ensure a power delivered by the cells between a minimum and a maximum and correlated jointly with the battery voltage and the load current.

FIG.1

## Description

The present invention relates to a supply system with fuel cells and a buffer battery for a self-supplied vehicle with electric drive.

It is known that, in the transport field, there is an ever greater need to use electric drive systems on road transport vehicles, particularly urban vehicles, instead of combustion engines which have a large environmental impact and, from the energy point of view, a lower efficiency than can be achieved with electric drive systems.

Pure electric drive with electrical energy drawn directly from a distribution network only apparently is the best solution, since it requires the production and maintenance of expensive and complex fixed plant (substations and a distribution network) and restricts the vehicles to obligatory routes.

Electric drive with a battery supply does not limit the mobility of the vehicles to obligatory routes but is seriously limited in terms of autonomy.

A first solution to these problems was the production of hybrid diesel/electric and battery vehicles in which a diesel engine operating at a constant speed at the point of minimum specific consumption drives an electric generator which continuously recharges a buffer battery for supplying electrical loads.

The environmental impact is thus limited with a good optimization of the power generated, in use.

The production of hybrid vehicles in which the buffer battery of a vehicle with electric drive is recharged by fuel cells has also been proposed, further reducing the environmental impact and the noise caused by these vehicles.

For example, the publication WO93/09572 describes a system for supplying an electric motor of an electric vehicle in which fuel cells recharge a buffer battery and the connection between the two elements is made by means of a generic voltage regulator the characteristics of which are not specified.

A basic problem in the production of hybrid vehicles of this type is constituted precisely by the interfacing of the fuel cells with the buffer battery and by the adjustment of the power delivered by the fuel cells in dependence on the load requirement of the vehicle and the charge state of the batteries.

The power output available from the stacks (or blocks) of fuel cells for practical use in vehicles is in fact associated with voltage and current values which are not compatible with the drive system which, in order to limit the current to values which can be withstood by the electronic components on the market, requires a sufficiently high voltage.

Moreover, the dynamic electrical characteristics of the two components, the fuel cells and battery, are very different.

Whereas the static internal resistance of the fuel cells is comparable to that of the battery, be it of the nickel-cadmium or of the lead type, in contrast, the fuel cells are much slower to adapt to transients of the power delivered and have a very high internal dynamic resistance and considerable hysteresis which is not compatible with the abrupt changes in load and power required of a vehicle.

Finally, it should be noted that the electrical characteristics of a battery are greatly influenced by its charge state and by its age.

The present invention solves this technical problem and provides a supply system with fuel cells and a buffer battery in which a highly efficient, very safe and extremely simple electronic regulation system forms the interface and ensures optimal performance of the drive system.

In particular, the electronic regulation system performs the following functions:

- it limits the current of the fuel cells to a maximum permitted design value which can be withstood by the cells; this is necessary because the fuel cells cannot limit their output power themselves;

- it regulates the power delivered by the cells in dependence on the charge state of the batteries and on the power required by the load;

- it limits the rate of increase of the power delivered by the cells to permissible values;

- it ensures galvanic isolation between the battery and the fuel cells, eliminating the risk of catastrophic events such as the destruction of the fuel cells as a result of recirculation of energy from the batteries to the fuel cells;

- it adjusts the voltage output by the fuel cells to a higher battery voltage.

These results are achieved by an electronic regulation system comprising a resonant converter with series load connected to the output of the fuel cells, a high-frequency step-up transformer with its primary connected to the output of the converter, and a rectifier bridge with fast diodes with its input connected to the secondary of the transformer and its output connected to the battery and logic control circuits. The latter detect the current absorbed by the load and the battery voltage and modify the working frequency of the converter so as to control the current, and hence the power, delivered.

The voltage output by the supply system, on the other hand, is continuously adjusted in relation to the battery voltage.

The characteristics and advantages of the invention will become clearer from the following description of a preferred embodiment and from the appended drawings, in which:

Figure 1 is a block diagram of a supply system for a vehicle according to the present invention,

Figure 2 is a graph showing the electrical characteristic of a fuel cell of the system of Figure 1,

Figure 3 is a graph showing the electrical characteristics of a battery of the system of Figure 1,

Figure 4 is a graph showing the electrical characteristic of a resonant converter of the system of Figure 1,

Figure 5 shows the regulation characteristics of the system of Figure 1,

Figure 6 shows the electrical layout of a preferred analog embodiment of the control circuit of the system of Figure 1,

Figure 7 is a block diagram showing a preferred digital embodiment of the control circuit of the system of Figure 1,

Figure 8 shows, in section, a preferred embodiment of an isolation and voltage-adaptation transformer for the system of Figure 1.

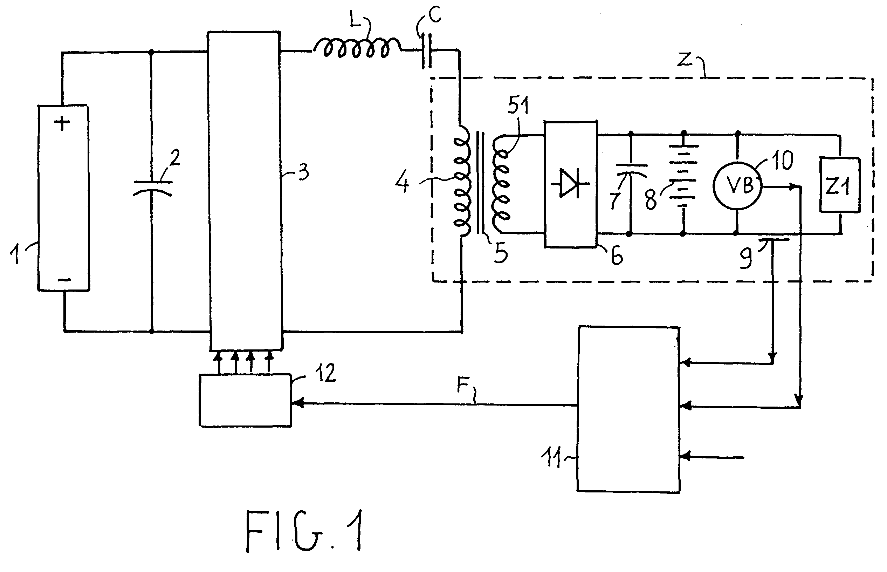

With reference to Figure 1, the hybrid supply system of the present invention comprises a stack of fuel cells 1 (preferably of the type with a solid polymer electrolyte SPE), an input capacitor 2, an H-shaped conversion bridge 3 for converting direct-current voltage to alternating pulses, the bridge being supplied by the stack of cells 1 and in turn supplying, arranged in series, an inductance L, a capacitor C and the primary 4 of a transformer 5 of which the secondary 51 is connected to the input of a diode rectifier bridge 6.

These diodes are preferably of the fast-recovery ISOTOPV type.

The output of the bridge 6 is connected to the terminals of a capacitive filter 7 and to the terminals of a buffer battery 8 which in turn supplies a variable load Z1 constituted by drive members of the vehicle and by the electronic control system thereof.

No inductance is required for smoothing and eliminating dynamic current transients for the coupling of the output of the bridge 6 to the battery 8.

The system is completed by a sensor 9 for detecting the current absorbed by the load, a sensor 10 for detecting the supply voltage delivered by the battery 8, and control logic 11 which generates a periodic variable-frequency control signal F for controlling the switching frequency of the conversion bridge 3 in dependence on the battery voltage and the load current.

The control logic 11 is completed by phase control logic 12 which generates, in dependence on the signal F, a plurality of control signals which are applied to each of the electronic switches of the conversion bridge 3 individually.

The conversion bridge 3, which is intended to operate at a fairly high switching frequency of from 10 to 40 KHz and more, is constituted by IGBT (insulated gate bipolar transistor) electronic switches.

These devices are characterized by a voltage drop of the order of 1.5-2 volts even for currents of the order of hundreds of amperes; they require minimal driving power and simple driver circuits and they have quite low switching losses.

Their working frequency is of the order of from 10 to 100KHz according to the power switched.

Each IGBT is associated with a fast antiparallel diode, in known manner, to enable it to operate with half-cycles of current of opposite senses, and a local control circuit which switches it on and off for a predetermined conduction interval P at a frequency set by the signal F.

This local control circuit is shown schematically for all four IGBTs by the block 12.

The conversion bridge 3, together with the inductance L, the capacitor C and the series load Z formed by the transformer 4 and by the loads supplied thereby, forms a resonant bridge converter with series load.

As is known, in order to regulate the power output, a resonant converter is operated with variations of the switching frequency.

Basically two modes of operation are provided for: discontinuous operation and continuous operation.

Discontinuous operation

In this mode of operation the conduction interval P of the switches of the bridge is constant and is equal to or greater than the resonance period $1/f$ of the network ($1/f = 2\Pi \sqrt{LC}$) and the variable switching period $l/F$ of the

3

switches is equal to or greater than twice the resonance period (1/F ≥ 2/f).

Resonant converters which operate in this way are called "quasi-resonant".

As is known, unlike non-resonant switching systems, a full-wave quasi-resonant converter (the bridge configuration of the converter ensures full-wave resonance) with a series load enables the switches to be closed and opened when the current flowing in the switches is theoretically zero.

The switching losses are thus drastically reduced and this enables the switches to operate at very high working frequencies limited only by the intrinsic switching times of the devices and not by the power which can be dissipated.

In addition to this property, however, a full-cycle semi-resonant converter also has the property that if the impedance/resistance of the load Z is less than the square root of the ratio between the inductance and the capacitance of the resonant circuit, that is, if, in the case of a purely resistive load $R < \sqrt{L/C}$, the amplitude of the sinusoidal current pulses introduced into the network and of the corresponding current pulses available in the secondary of the transformer 5 is substantially independent of the load impedance and depends solely on the supply voltage and on the values of L and C.

If the supply voltage is constant and, from this point of view, the fuel cells which supply the conversion bridge are in practice a constant-voltage generator, the average value of the current delivered to the load by a full-cycle quasi-resonant generator is proportional to the number of current pulses introduced per unit of time and hence to the switching frequency F.

This enables the power delivered by the fuel cells to the load to be controlled simply, precisely and effectively without the need to control the voltage output by the smoothing filter 7 in any way in order to adjust it to the voltage actually present at the terminals of the battery 8 and to the load requirement. Naturally, the transformer 5 has to have a turns ratio adequate to take account of the need to apply voltage and current pulses to an active load constituted by a voltage generator (battery) in opposition to the pulse voltage which is output by the transformer and applied to the load by means of the diode bridge.

Since the voltage pulses applied to the primary cannot exceed the minimum voltage output by the fuel cell (for example 460 volts) and the maximum battery voltage is greater (for example 750 volts) it is necessary for the turns ratio NS/NP of the transformer (where NP is the number of primary turns and NS is the number of secondary turns) to be greater than 1 and, theoretically, the ratio between the maximum battery voltage and the minimum voltage delivered by the fuel cell is preferably of the order of twice the ratio between the mean value of the battery voltage and the mean value of the voltage delivered by the fuel cells.

This is because of the considerations which will be developed below.

At the level of a supply system such as that under discussion herein, the drawback of the use of a quasi-resonant converter is that the maximum current is delivered when the switching frequency is at a maximum and equal to half the resonance frequency.

As a first approximation, since the losses in the magnetic circuit of a transformer supplied by current pulses of uniform shape and variable period increase in proportion to the working frequency and those in the windings increase with the square of the current, in a system with a quasi-resonant converter with a transformer, the losses in the transformer (and in the inductance of the resonant circuit) increase more than proportionally with the working frequency and, in maximum current conditions, are higher than for other working conditions and may render the dimensions of the transformer critical.

It is therefore advantageous to replace the quasi-resonant operation of the converter (even though the switching losses in the switches are virtually cancelled out in this operation mode) with continuous operation.

Continuous operation

In this mode of operation, the switching frequency of the converter is equal to or greater than the resonance frequency of the circuit and the current delivered decreases as the frequency increases by a law determined by the impedance of the resonant circuit (which is variable with frequency).

The switching of the switches of the converter takes place with zero current only for a switching frequency equal to the resonance frequency and, for higher frequencies, the current is not zero but is nevertheless less than the peak current and decreases with increase in frequency.

With an acceptable penalization of the operation of the converter, the advantage is thus achieved that the losses in the transformer in the various load conditions are equalized to a certain extent and, for all load conditions, have a value which is much less than would occur in the case of a converter operating discontinuously at the maximum frequency and at the corresponding maximum load.

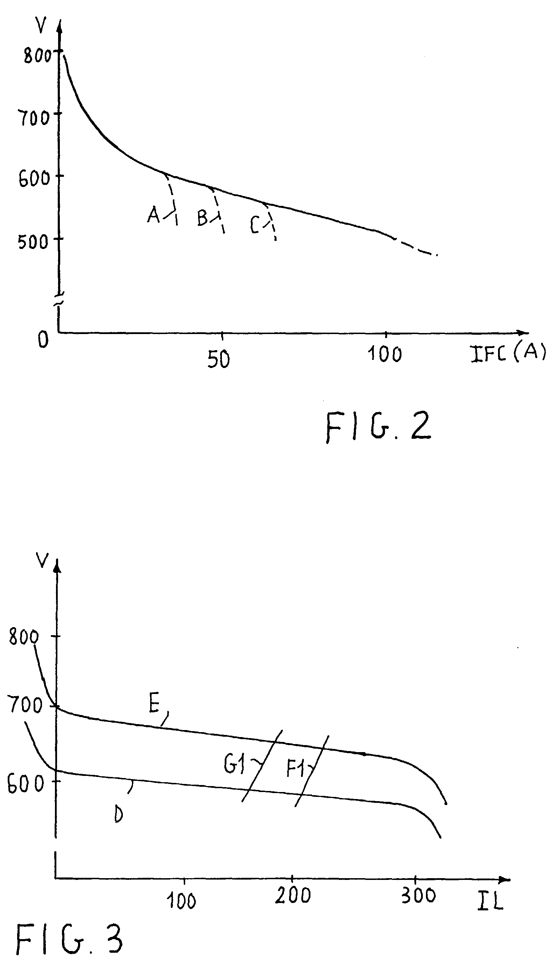

Before the control logic 11 is described in greater detail, it is appropriate to consider, with reference to Figures 2, 3 and 4, the electrical characteristics of the fuel cells, of the batteries, and of the system constituted by the fuel cells and by the quasi-resonant converter connected to an active load, which constitutes a characteristic of the present invention.

Figure 2 shows as a graph of the voltage V and the current IFC, the static characteristic of an SPE fuel cell (in practice formed by a stack of cells) used in the present application and shows that the voltage delivered with a load of between a few A up to 100 A varies linearly between about 640 and 500 V.

The load limit of 100 A is dictated by structural concerns and corresponds to the maximum power which can be delivered by the cell.

The internal resistance of the cell is about 1.7-1.8 $\Omega$.

The static characteristic shown also describes the behaviour of the cell in dynamic conditions if the increases in load over time are less than a predetermined limit of the order of 80A/s.

For increases in load greater than 80A/s, under any load conditions, there are large voltage drops represented by the broken lines A, B and C.

The maximum permissible power delivered by the fuel cell is of the order of 50 KW and advantageously constitutes a fraction of between 10% and 30% (for example, 20%) of the peak power required by the drive system, and is equal to the mean value of the power absorbed by the drive system within the daily working span, increased by a value of between 10% and 20% to take account of the conversion efficiency at the various levels and to permit buffer operation of the fuel cell which, on average, can meet the daily energy requirements.

Figure 3 shows as a graph of voltage V and current IL, two electrical characteristics D, E of a nickel cadmium battery for use in the present application, corresponding, respectively, to a state of minimum accumulated charge (graph D) and to a state of maximum accumulated charge (graph E) in the battery.

In delivery conditions, the apparent internal resistance of the battery varies between about 0.4 $\Omega$ and 0.75 $\Omega$.

In charging conditions, the apparent resistance is much higher.

Clearly, therefore, a predetermined voltage measured at the terminals of the battery does not unequivocally identify a working point of the battery but identifies a plurality of possible working points.

In order to identify a working point of the battery unequivocally, it is necessary to detect both the voltage at its terminals and the current delivered or absorbed.

In addition to the working point, the pair of values V, I also defines the charge state of the battery.

However, the working point of the battery does not fully define the working condition of the supply system and indicates only the algebraic sum of the current delivered by the fuel cell through the converter and the current absorbed by the load.

The maximum permissible power delivered by the battery, even for a fairly discharged battery, is of the order of 150 KW, which is about 80% of the peak power (180 KW) required by the system in drive: in fact, the peak power output is achieved with the participation of both the battery and the fuel cells.

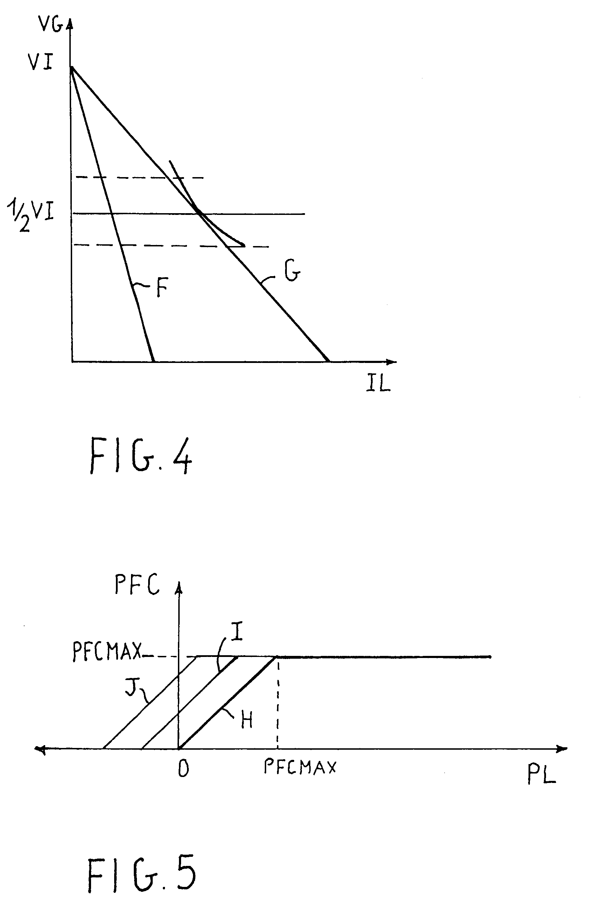

Figure 4 shows the output electrical characteristics of the system constituted by the fuel cells and by the converter, connected to an active load (a voltage generator) such as a battery.

In the case of a passive load, the mean current output by the converter (or more precisely by the rectifier bridge) is independent of the load value and depends solely on the switching frequency of the converter. The output characteristic V, I (with a constant supply voltage) for any predetermined working frequency would be virtually a vertical line corresponding to a predetermined output current.

In each characteristic, the working point or the voltage V would be set by the power absorbed by the load.

In the case of an active load, this description is no longer valid and it is necessary to take account of the voltage generated by the load.

Without going into analytical considerations in detail, it is possible to confirm that, if VG is the output voltage of the system applied to the primary of the transformer and VI is the supply voltage (hence VG is the battery voltage applied to the primary, that is, divided by the turns ratio of the transformer and VI is the voltage delivered by the fuel cells) the characteristics V,I of the system are segments F, G extending like rays from a working point with zero current and voltage VI with downward slopes which are variable in dependence on the switching frequency.

More precisely, the slope decreases as the switching frequency increased if the converter operates discontinuously (a quasi-resonant converter) and increases with increases in switching frequency if the converter operates continuously.

For values of the voltage VG close to half of the voltage VI the characteristics F, G also represent curves of load at constant power.

If it is borne in mind that the range of variation of the battery voltages in the various load conditions for the various charge states is of the order of ± 25% relative to a mean value, it may be considered, with a negligible error, that, throughout the range of variation, the various characteristics represent a power output which depends exclusively on the switching frequency of the converter.

In the case of continuous operation of the converter, the graph G represents the maximum power delivered at the minimum switching frequency F; the latter, as a minimum, may equal the resonance frequency f of the converter and corresponds to 10 KHz.

The graph F represents the minimum power delivered at the maximum switching frequency; for example, the minimum power is 20% of the maximum power and corresponds to a switching frequency of the order of 40 KHz.

In the case of discontinuous operation of the converter, the graph G represents the maximum power delivered at the maximum switching frequency F, for example 40 KHz which, at the maximum, may be 1/2 of the resonance frequency f of the converter.

In this case, the graph F represents the minimum power delivered at the minimum switching frequency; for example, this is 20% of the maximum power and corresponds to a switching frequency of the order of 10 KHz.

Clearly, with due variations of scale, Figure 4 represents both the electrical characteristics of the conversion system applied to the primary of the transformer and those applied to the secondary.

The electrical characteristics of the fuel cell/converter system of Figure 4, specularly transposed (to take account of the fact that the currents output by the system are input to the battery) and translated relative to the origin of the abscissa by a distance corresponding to a generic load current IL, define the working point of the supply system in dependence on the switching frequency of the converter, on the load current IL, and on the charge state of the battery.

For example, if IL = 250 A, the characteristics F, G of Figure 4 correspond to the characteristics F1, G1 of Figure 3.

Conversely, if the load current IL and the voltage available at the terminals of the battery are known, it is possible to define the switching frequency which brings about the delivery of a predetermined power by the fuel cell.

The power delivered can be varied simply by varying the switching frequency according to a predetermined regulation characteristic.

A regulation characteristic which is preferred owing to its simplicity and which requires solely the measurement of the battery voltage and the load current is represented in the regulation graph of Figure 5 which shows the power PFC delivered by the fuel cell as available to the output of the converter, as a function of the power PL absorbed by the load L.

For power values PL greater than the maximum power PFCMAX which can be delivered by the fuel cell, the power delivered by the fuel cell is kept constant and equal to the maximum PFCMAX so as to make a maximum contribution to the load requirement.

For load powers less than PFCMAX, the power delivered by the fuel cell is made to depend upon the charge state of the battery.

In particular, if the battery voltage indicates a fully charged condition, the power PFC delivered by the cell is equal to the load power PL (graph H).

If the battery voltage is lower and thus indicates a partial charge condition, the regulation band is proportional and is displaced in accordance with the lower voltage so as to deliver a recharging power to the battery.

The graphs I, J represent, by way of example, the regulation characteristics for a battery charge Q equal to 50% and for a charge Q equal to 10%.

The portions of the regulation characteristics which are disposed in the left-hand quadrant (PL < 0) indicate that the power for recharging the battery is the accumulation of a negative load power (recovered from the load, for example, during braking) and a power delivered by the fuel cell, which vary inversely maintaining a predetermined and constant recharging power which depends upon the battery voltage and hence upon its charge condition.

The maximum recharging power is advantageously limited to a maximum permissible value for the battery.

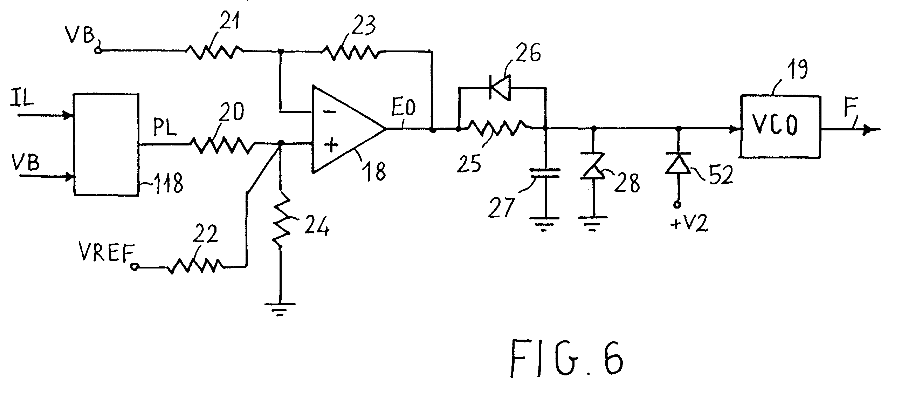

A regulation characteristic of this type can easily be achieved by the regulation circuit of Figure 6 which constitutes a preferred embodiment of that portion of the control logic 11 of Figure 1 which performs the regulation function.

The circuit of Figure 6 relates to the case of a resonant converter operating discontinuously, in which the current delivered by the converter increases with the switching frequency; with obvious modifications, it can also be adapted to the case of a resonant converter operating continuously.

The regulation circuit of Figure 6 comprises essentially an analog multiplier 118, an operational amplifier 18, a voltage-controlled oscillator VCO 19 and a plurality of passive components such as resistors 20, 21, 22, 23, 24, 25, a diode 26, a capacitor 27 and a Zener diode 28.

The analog multiplier 118 receives as an input a signal IL correlated to the load current and a signal VB correlated to the battery voltage and produces an output signal PL correlated to the load power.

The inverting input of the amplifier is connected to its output by the feedback resistor 23.

The signal PL is applied to the non-inverting input of the amplifier through the resistor 20.

The non-inverting input is also connected to earth through the resistor 24 which has a resistance equal to that of the feedback resistor 23.

The output of the amplifier is connected to the input of an integrator circuit or low-pass filter formed by the resistor 25 and the capacitor 27.

In static or almost static conditions the voltage output by the integrator circuit is equal to the voltage E0 output by the amplifier.

In dynamic conditions, with abruptly increasing voltage A0, the voltage output by the integrator circuit increases slowly in dependence on the time constant RC of the integrator circuit.

A diode 26 in parallel with the resistor 25, however, ensures immediate adjustment (as far as the output impedance of the amplifier allows) of the voltage output by the integrator circuit for abrupt drops in the voltage E0.

The output of the integrator circuit is connected to the input of the VCO 19 which generates a periodic square-wave output signal F with a frequency proportional to the input voltage.

A Zener diode 28 connected between the input of the VCO and earth limits the input voltage to a predetermined maximum value.

In the absence of other connections (resistors 21, 22) and input signals, the circuit described produces, in dependence on the input signal PL, an output signal of frequency F (proportional to PL) according to the regulation characteristic represented by the graph H of Figure 5.

The frequency F is limited to a maximum value (set by the Zener voltage of the diode 28) corresponding to the maximum power which can be delivered by the fuel cell.

Moreover, the rate of increase of F is limited to values permissible for the fuel cell by a suitable selection of the time constant RC of the integrator circuit.

In order to modify the output signal of the circuit in dependence on the downward deviation of the battery voltage from a voltage level corresponding to the voltage for a fully charged battery without load, a reference voltage VREF corresponding to the voltage without load is applied to the non-inverting input of the amplifier through the resistor 22 whilst the measured battery voltage is applied as a signal VB to the inverting input through the resistor 21.

If R1 and RF are the resistances of the resistors 20, 21, 22 and of the resistors 23, 24, respectively, the voltage E0 is given by

$$E0 = RF/R1 \ (PL + VREF - VB) = RF/R1 \ (PL - \Delta V)$$

where $\Delta V$ is the voltage deviation.

More generally, with a suitable selection of the value of the resistors 20, 21, 22 it is possible to adjust the various signals in scale so that $E0 = K1 \ (PL + K2.\Delta V)$ where K1 and K2 are suitable coefficients.

In order to adapt the circuit described to the control of a continuously operating converter, it suffices, amongst the many solutions, to use a voltage-controlled oscillator in which the oscillation frequency varies inversely with the control voltage, or to insert an operational amplifier with a subtracter function between the output of the integrator circuit 25, 27 and the VCO 19 in order to subtract the voltage output by the integrator circuit 27, 25 from a reference voltage equal to the Zener voltage of the Zener diode 28.

The circuit of Figure 6 represents only a preferred analog embodiment which has been described for its simplicity. Clearly, however, many variations may be applied.

For example, the Zener diode 28 is superfluous if the maximum voltage A0 delivered by the amplifier imposes on the VCO the output signal frequency equal to the predetermined maximum.

Similarly, the one-way low-pass filter formed by the resistor 25, by the capacitor 27 and by the diode 26 can be incorporated in the feedback circuit of the amplifier.

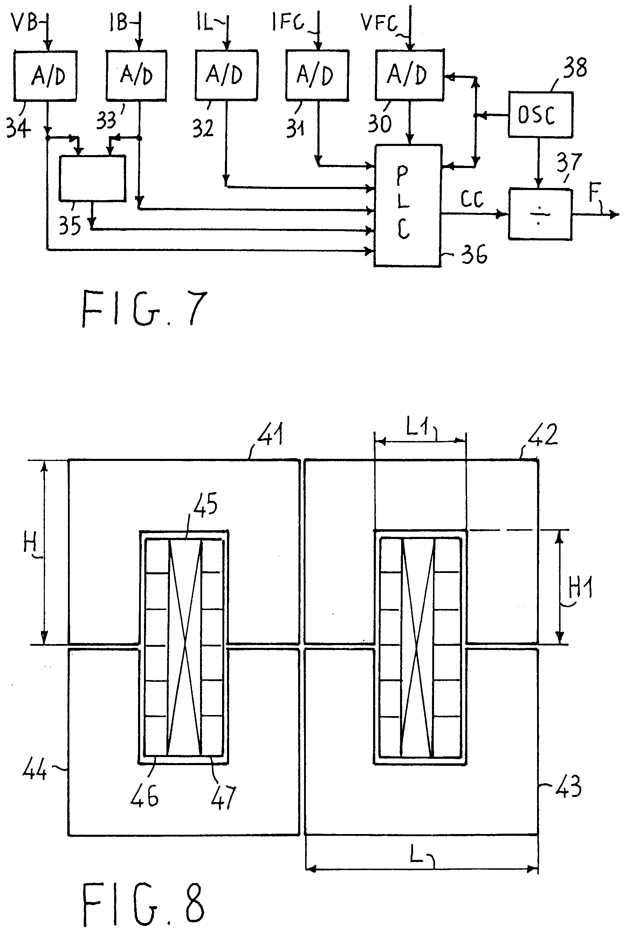

More significant modifications result from the use of digital control logic, an embodiment of which is shown schematically in Figure 7, instead of analog circuits.

A plurality of analog/digital converters 30, 31, 32, 33, 34 convert analog signals relating to cell voltage VFC, cell current IFC, load current IL, battery current IB and battery voltage VB, respectively, into corresponding digital data.

A programmable memory 35 to which the digital data corresponding to the working conditions of the battery are addressed outputs a code indicative of the charge condition.

A programmable logic device PLC 36 which may also consist of a standard microprocessor for industrial use receives, as inputs, the codes representative of the voltage and current output by the fuel cell, defines what the working condition of the fuel cell should be in dependence on the load current IL and the charge condition of the battery, and outputs a control code CC which is applied as an input to a controlled frequency divider 37.

The frequency divider is timed by a periodic signal of predetermined frequency generated by an oscillator 38 and produces an output signal F with a frequency equal to the switching frequency which is imposed on the quasi-resonant converter.

Whereas the regulation circuit of Figure 6 is of the open-loop regulation type, the diagram of Figure 7 represents a regulation system with a feedback loop since it provides for the use of the signals VFC and IFC for the measurement of the power actually delivered by the fuel cell and its comparison with the power set and the correction of any error.

Many other variations and improvements may be applied.

For example, as well as an upper limit on the power delivered by the fuel cell, it is possible to preset a lower limit for the power delivered, for example, of 20% of the maximum power and corresponding to the mean power taken up by the service equipment of the electric vehicle.

With reference to Figure 6, this can be achieved, for example, by the connection of the input of the VCO 19 to a diode 52 the anode of which is connected to a voltage supply +V2 of suitable value.

This also permits optimal dimensions of the filter capacitors 2 and 7 of Figure 1 and working conditions with a frequency preferably greater than 20 KHz with the elimination of audible-frequency noise generated by the inductor L and by the transformer 5 (Figure 1) as a result of the current pulses.

In a quasi-resonant power conversion system with a transformer, conversion efficiency is greatly affected by the characteristics of the transformer and by its dimensions.

The transformer 5 should have insulation which enables it to withstand, with due safety margins, the primary voltage which is applied thereto as a square wave by the converter and which corresponds, in the worst case, to the maximum voltage delivered by the fuel cell (800 volts without a load).

The secondary has to be able to withstand the maximum battery voltage (= 750 V in recharging conditions).

The dimensions must be such as to prevent saturation of the magnetic circuit at the peak value of the pulsed current imposed by the resonant circuit, which is of the order of 140 A in the primary.

The losses in the core (owing to hysteresis and stray currents) and in the windings (resistive) have to be kept within limits such as to enable the transformer to be cooled by natural air circulation within an electrical panel housing the entire electronic power system, with an ambient temperature of between -20°C and +50°C.

Finally, the transformer has to be able to operate in a frequency range of between 10 KHz and 50 KHz.

It thus has to reconcile the specific requirements of high-frequency transformers with those of power transformers.

Figure 8 shows, in section, a preferred embodiment of a transformer which satisfies these requirements, formed with a modular structure from commercially-available magnetic components.

In fact, no transformers exist for applications of this type.

The transformer comprises a magnetic core formed by four packs 41, 42, 43, 44 of U-shaped ferrite cores juxtaposed to form two parallel cavities for housing primary and secondary windings with generally rectangular turns.

Each of the packs is formed in turn by a plurality of separate ferrite cores juxtaposed in a direction perpendicular to the plane of the drawing.

The packs may be clamped and bound together by mechanical ties or, preferably, cemented with epoxy resin with the winding inserted.

By way of example, each elementary ferrite core has a width L of 93 mm, a height H of 76 mm, a cavity width L1 of 34 mm and a cavity depth H1 of 48 mm.

The thickness of the cores is 20 mm.

Each pack is formed by four cores. A larger number of cores may be used if a greater power is required.

In order to limit the leakage reactance value, the winding selected is of the concentric type with two primaries 46, 47 between which the secondary 45 is interposed.

To reduce the skin effect in the windings, these are formed with a Litz wire with outer synthetic polyamide paper insulation known commercially as NOMEX, which can withstand temperatures up to 180°C.

## Claims

1. A supply system with fuel cells and a buffer battery for self-supplied vehicles with electric drive comprising:

   - a fuel cell (1),

   - a buffer battery (8),

   - an electric load (Z1) supplied by the battery,

   and characterized in that it comprises:

   - a resonant convertor (3, L, C) with a series load (Z), supplied by the fuel cell (1),

   - a transformer (5) with a primary (4) connected to the output of the resonant converter (3, L, C) and a secondary (51),

   - a diode rectifier bridge (6) with its input connected to the secondary (51) and its output connected to a capacitive filter (7) and to the terminals of the battery (8),

   - means (9, 10) for detecting the voltage at the battery terminals and the current delivered to the load (Z1), and

   - control means (11) coupled to the detection means (9, 10) in order to impose on the converter (3) a switching frequency correlated jointly with the load current and with the battery voltage.

2. A system according to Claim 1, in which the fuel cell (1) is a solid polymer electrolyte cell with an output voltage lower than the voltage of the buffer battery (8).

3. A system according to Claim 1, in which the converter (3, L, C) comprises a conversion bridge (3) formed by IGBT controlled transistors.

4. A system according to Claim 1 in which the converter is a continuously operating converter and the control means (11) comprise means (28) for limiting the switching frequency to a minimum value corresponding to a power converted by the converter equal to the maximum power which can be delivered by the fuel cell (1).

5. A system according to Claim 4, in which the control means (11) comprise means (25, 26, 27) for limiting the rate of decrease of the switching frequency to a predetermined value correlated with the maximum permitted rate of increase of the power delivered by the fuel cell.

6. A system according to Claim 4 or Claim 5, in which the control means (11) comprise means (52) for limiting the switching frequency to a maximum value corresponding to a power converted by the converter equal to a minimum power.

7. A system according to Claim 1, in which the converter is a discontinuously operating converter and the control means (11) comprise means (28) for limiting the switching frequency to a maximum value corresponding to a power converted by the converter equal to the maximum power which can be delivered by the fuel cell (1).

8. A system according to Claim 7, in which the control means (11) comprise means (25, 26, 27) for limiting the rate of increase of the switching frequency to a predetermined value correlated with the maximum permissible rate of increase of the power delivered by the fuel cell.

9. A system according to Claim 7 or Claim 8, in which the control means (11) comprise means (52) for limiting the switching frequency to a minimum value corresponding to a power converted by the converter equal to a minimum power.

10. A system according to the preceding claims, in which the transformer (5) comprises a magnetic core formed by four packs (41, 42, 43, 44) of modular, U-shaped, ferrite cores arranged so as to form two cavities for housing the two opposite sides of a primary winding (46, 47) and a secondary winding (45) with rectangular turns.

FIG.1

FIG. 2

FIG. 3

FIG. 4

FIG. 5

FIG. 6

EP 0 782 209 A1

FIG. 7

FIG. 8

**European Patent Office**

# EUROPEAN SEARCH REPORT

Application Number

EP 95 83 0562

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 025 860 (SHIBATA TAKANORI ET AL) 24 May 1977<br>* column 2, line 60 - column 4, line 11; figures 3-5,9 *<br>* column 5, line 27 - line 53 *<br>* column 6, line 32 - line 63 *<br>* column 7, line 24 - line 27 * | 1 | H01M8/04<br>B60L11/18<br>H01M16/00<br>H02J7/00 |
| A | JP-A-58 218 802 (NISSAN JIDOSHA KK) 20 December 1983<br>* figures 6,8 *<br>& PATENT ABSTRACTS OF JAPAN<br>vol. 8, no. 73 (M-287), 5 April 1984<br>* abstract * | 1 | |
| A | PATENT ABSTRACTS OF JAPAN<br>vol. 011, no. 174 (E-513), 4 June 1987<br>& JP-A-62 008460 (TOSHIBA CORP), 16 January 1987,<br>* abstract * | | |
| A | US-A-4 411 967 (YANO MASAO) 25 October 1983 | | TECHNICAL FIELDS SEARCHED (Int.Cl.6)<br>H01M<br>B60L<br>H02J |
| A | GB-A-1 473 798 (NISSAN MOTOR) 18 May 1977<br>* claims 5,6; figures 8,10 * | | |
| A | US-A-3 987 352 (HIROTA TOSHIO) 19 October 1976 | | |
| A | US-A-4 670 702 (YAMADA MAKOTO ET AL) 2 June 1987 | | |

The present search report has been drawn up for all claims

| Place of search | Date of completion of the search | Examiner |
|---|---|---|
| THE HAGUE | 17 July 1996 | D'hondt, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)